# EUROPÄISCHE PATENTSCHRIFT

(11) **EP 0 802 528 B1**
(45) Veröffentlichungstag und Bekanntmachung des Hinweises auf die Patenterteilung: **18.11.2009**
(21) Anmeldenummer: 97105764.1
(22) Anmeldetag: 08.04.1997
(51) Int. Cl.: G11B 7/09

(54) **Kompatibles Aufzeichnungs- oder Wiedergabegerät**
Compatible recording and reproducing device
Appareil d'enregistrement et de reproduction compatible

(30) Priorität: 17.04.1996 DE 19614970
(43) Veröffentlichungstag der Anmeldung: 22.10.1997
(73) Patentinhaber: THOMSON Licensing, 92100 Boulogne-Billancourt (FR)
(72) Erfinder: Dang, Lieu Kim, 78056 Villingen-Schwenningen (DE); Büchler, Christian, 78052 Villingen-Schwenningen (DE); Schroeder, Heinz, Jörg, 78052 Villingen-Schwenningen (DE)
(74) Vertreter: Kurth, Dieter

(56) Entgegenhaltungen:
- EP-A- 0 019 379
- EP-A- 0 423 364
- EP-A- 0 459 420
- EP-A- 0 643 387
- EP-A- 0 646 909
- EP-A- 0 739 003
- US-A- 4 773 052
- US-A- 5 113 378
- PATENT ABSTRACTS OF JAPAN vol. 017, no. 696 (P-1664), 20.Dezember 1993 & JP 05 234107 A (SONY CORP), 10.September 1993,
- PATENT ABSTRACTS OF JAPAN vol. 002, no. 109 (E-056), 9.September 1978 & JP 53 074403 A (TOSHIBA CORP), 1.Juli 1978,

## Beschreibung

Die Erfindung betrifft ein kompatibles Aufzeichnungs-oder Wiedergabegerät mit Dreipunktabtastung für unterschiedlichen Spurabstand aufweisende Aufzeichnungsträger.

Optische und magnetische Aufzeichnungsträger, die unterschiedliche Spurabstände aufweisen, sind allgemein bekannt. Aufzeichnungsträger mit geringerem Spurabstand sind meist neuerer Generation und ermöglichen in der Regel das Aufzeichnen oder die Wiedergabe größerer Informations- oder Datenmengen. Um in Aufzeichnungs- oder Wiedergabegeräten neuerer Generation für Aufzeichnungsträger mit geringerem Spurabstand auch weiterhin Aufzeichnungsträger älterer Generation mit größerem Spurabstand verwenden zu können, müssen diese Aufzeichnungs- oder Wiedergabegeräte zu den unterschiedlichen Aufzeichnungsträgern kompatibel sein. Es ist beispielsweise wünschenswert, in einem Aufzeichnungs- oder Wiedergabegerät für optische Aufzeichnungsträger hoher Speicherdichte, einer sogenannten SD, die auch Super Density disc genannt wird, ebenfalls CDs abspielen zu können. Die SD weist gegenüber der CD eine höhere Speicherdichte auf, die unter anderem durch einen geringeren Spurabstand erreicht wird. Um in einem Aufzeichnungs- oder Wiedergabegerät sowohl eine SD als auch eine CD lesen zu können, ist deshalb ein kompatibles Spurführungssystem erforderlich. Aufgrund der höheren Spurdichte bzw. des geringeren Spurabstandes bei der SD ist die Spurführung der SD mit einem allgemein bekannten Dreistrahlsystem kritischer als bei einer CD. In einem kompatiblen Aufzeichnungs- oder Wiedergabegerät, das sowohl das Abspielen einer CD als auch einer SD mit dem gleichen optischen Abtastsystem ermöglicht, muß deshalb die Dreistrahlspurführung in einer Weise eingestellt werden, so daß sie für die SD optimal ist. Das bedeutet, daß die zur Spurführung vorgesehenen Strahlen, die auch als Hilfsstrahlen E und F des optischen Systems bezeichnet werden, derart justiert werden müssen, daß sie die SD-Spur beidseitig tangieren. Dadurch wird die Spurführung auf einer CD mit dem Dreistrahlsystem schwieriger, da die Hilfsstrahlen nahezu vollständig auf der CD-Spur, die eine größere Breite aufweist, abgebildet werden. Die Amplitude und der Phasenabstand zur Spurführung werden geringer, so daß die Wiedergabe einer Disk mit großer Exzentrizität nicht sichergestellt werden kann.

Aus der EP 129 760 ist es bereits bekannt, den Abstand der zur Spurführung vorgesehenen Strahlen zum Hauptlichtfleck durch Drehen des Gitters, mit dem die Hilfsstrahlen IF erzeugt werden, den entsprechenden Erfordernissen anzupassen. Hierzu sind jedoch Steuermittel erforderlich, die einen zusätzlichen Aufwand erfordern.

Es ist deshalb Aufgabe der Erfindung, ein kompatibles Aufzeichnungs- oder Wiedergabegerät zu schaffen, das es auch ohne Veränderung der Einstellung des Dreipunktabtastsystems ermöglicht, Aufzeichnungsträger mit unterschiedlichem Spurabstand in diesem Gerät zu verwenden.

Erfindungsgemäß wird diese Aufgabe entsprechend den Hauptansprüchen gelöst. Vorteilhafte Weiterbildungen sind in den Unteransprüchen angegeben.

Erfindungsgemäß wird bei dem Dreipunktabtastsystem der Abstand der Abtastmittelpunkte für ein kompatibles Aufzeichnungs- und Wiedergabegerät für SD und CD derart gewählt, daß er annähernd 7/4 des Spurabstandes des Aufzeichnungsträgers mit dem geringeren Spurabstand und annähernd 3/4 des Spurabstandes des Aufzeichnungsträgers mit dem größeren Spurabstand beträgt. Der Aufzeichnungsträger mit dem geringeren Spurabstand ist die SD, und der Aufzeichnungsträger mit dem größeren Spurabstand ist die CD. Die Anwendung der Erfindung ist jedoch nicht auf spiralförmige Daten- oder Informationsspur aufweisende Aufzeichnungsträger beschränkt. Die Daten- oder Informationsspuren des Aufzeichnungsträgers können auch Parallelspuren sein. Weiterhin ist die Erfindung nicht auf optische Aufzeichnungsträger wie die SD und CD beschränkt, sondern kann gleichermaßen für Aufzeichnungsträger im Zusammenhang mit einer Mehrspuraufzeichnung und unterschiedlichen Spurabständen verwendet werden.

Nachfolgend wird die Erfindung anhand von Zeichnungen näher erläutert. Es zeigen:
- Fig. 1: Aufzeichnungsträger mit unterschiedlichem Spurabstand und Dreipunktabtastung,

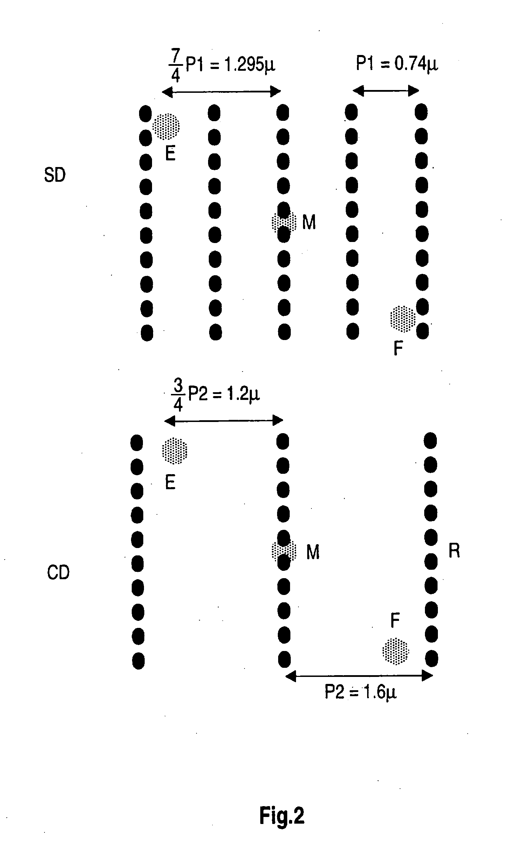

- Fig. 2: Aufzeichnungsträger mit unterschiedlichem Spurabstand und Abtastpunktanordnung eines kompatiblen Aufzeichnungs- oder Wiedergabegerätes,
- Fig. 3: Diagramm der Hilfsstrahlintensität.

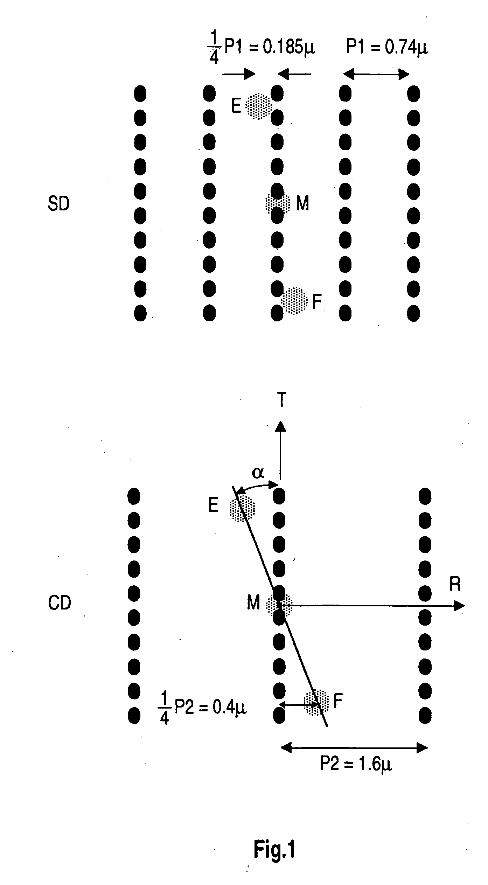

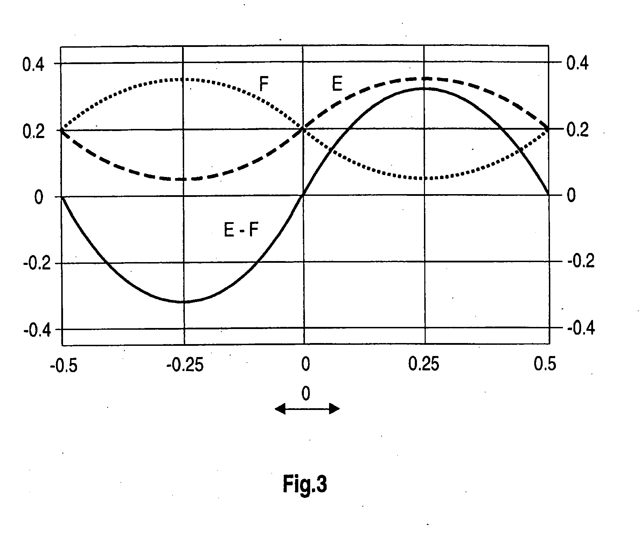

Fig. 1 entsprechend weist ein erster Aufzeichnungsträger SD einen ersten Spurabstand P1 und ein zweiter Aufzeichnungsträger CD einen Spurabstand P2 auf. In einem ersten Ausführungsbeispiel sei die CD eine bekannte Audio-CD mit einem Spurabstand P2 = 1,6 µm. Der erste Aufzeichnungsträger SD weist einen vergleichsweise geringeren Spurabstand P1 von 0,74 µm auf. Zur Spurführung wird eine Dreipunktabtastung verwendet, die auch als Dreistrahlspurführung bezeichnet wird. Die Dreistrahlspurführung benutzt den Effekt, daß im Mittel die Intensität des vom Aufzeichnungsträger reflektierten Lichtes ansteigt, wenn der Lichtstrahl einem Weg zwischen den Spuren folgt. Die größte Modulation und geringste durchschnittliche Intensität wird auf einem Weg erreicht, der exakt der Mitte der Spur folgt. Die größte Intensität weist das vom Aufzeichnungsträger SD, CD reflektierte Licht auf, wenn der Lichtstrahl auf einem Weg genau zwischen zwei Spuren geführt wird. Von den beiden äußeren Strahlen, die auch als Hilfslichtflecke E, F bezeichnet werden, wird ein Spurfehlersignal abgeleitet. Die Hilfsstrahlen E, F weisen zum Hauptstrahl M vor- und nacheilend den gleichen Abstand auf und werden mit einem optischen Gitter erzeugt. Wenn der Mittenstrahl entsprechend der in Fig. 1 angegebenen radialen Richtung R bewegt wird, sollen die Hilfsstrahlen E und F derart justiert sein, so daß, wenn der Hilfsstrahl E die Spurmitte erreicht, der andere Hilfsstrahl F sich in der Mitte zwischen den Spuren befindet. Im Idealfall beträgt die Phasenverschiebung des Durchschnittssignals 180°. Durchschnitt bedeutet hier, daß eine Zeitkonstante derart verwendet wird, daß die tangentialen Pits nicht mehr aufgelöst werden, aber die Intensitätsmodulation aufgrund des Überschreitens der Spur in radialer Richtung noch detektierbar ist. Da der Spurradius für Spuren am äußeren Rand der Disk größer ist, als für innere Spuren, schwankt die Phasendifferenz zwischen den Hilfsstrahlen E und F geringfügig, wenn eine Disk vollständig von der Innenseite bis zur Außenseite wiedergegeben wird. Die Phasendifferenz ist umso größer, je größer der in Fig. 1 dargestellte Tangentialwinkel α zwischen einer die Mittelpunkte der Hilfsstrahlen E, F verbindenden Geraden und der Spurrichtung T ist. Geringste Veränderungen der Phasenlage werden erreicht, wenn der Tangentialwinkel α klein ist. Dies ist insbesondere der Fall, wenn alle drei Strahlen die gleiche Spur berühren. Das in Fig. 3 dargestellte Diagramm zeigt die Intensität des Signals von den Hilfsstrahlen E und F für den Fall, daß der Tangentialwinkel α einen Wert aufweist, bei dem die Phasenverschiebung zwischen den beiden Signalen 180° beträgt. Das Spurfehlersignal entspricht der Differenz der von den Hilfsstrahlen E und F bereitgestellten Signale und weist einen einer Sinus-Kurve ähnlichen Verlauf auf. Die Maßeinheit für die Intensität I wurde willkürlich gewählt und auf der Abzissen-Achse sind Spurabweichungen O nach rechts und links von der Spur als Anteile des Spurabstandes dargestellt. Es ist zu erkennen, daß die Differenz der von den Hilfsstrahlen E, F gebildeten Signale aufgrund der Phasenverschiebung von 180° zu einem Fehlersignal mit vergleichsweise größerer Intensität führt.

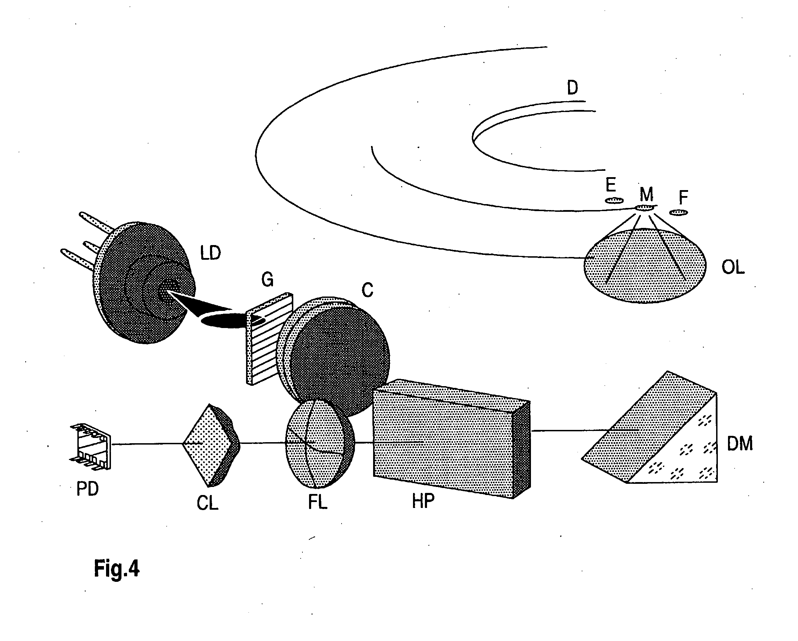

Dieser Bedingung entsprechend sind in Fig. 1 die Hilfsstrahlen E, F für unterschiedliche Aufzeichnungsträger SD, CD in einem unterschiedlichen seitlichen Abstand zueinander angeordnet. Bei einem Spurabstand P1 = 0,74 µm bei einer SD beträgt der optimale seitliche Abstand der Abtastmittelpunkte der Hilfsstrahlen E, F zum zentralen Abtastpunkt M P1/4 = 0,185 µm. Dieser Abstand ist gleich dem Abstand der Abtastmittelpunkte der Hilfsstrahlen E, F zur Spurmitte, sofern sich der zentrale Abtastpunkt exakt auf der Spur befindet. Bei einer CD, die einen Spurabstand P2 = 1,6 µm aufweist, ergibt sich hingegen ein optimaler Abstand der Abtastmittelpunkte der Hilfsstrahlen E, F zu P2/4 = 0,4 µm. Aufgrund der unterschiedlichen Spurabstände P1, P2 ist auch ein Tangentialwinkel α zwischen einer die Mittelpunkte der Hilfsstrahen E und F verbindenden Geraden und der Spurrichtung T von der Art des Aufzeichnungsträgers CD oder SD bzw. deren Spurabstand P1, P2 abhängig. In einem kompatiblen Aufzeichnungs- oder Wiedergabegerät, dessen Aufbau in Fig. 4 schematisch dargestellt ist, müßte folglich das die Hilfsstrahlen E und F erzeugende Gitter G dem jeweiligen Typ des Aufzeichnungsträgers SD, CD bzw. den Spurabständen P1, P2 entsprechend eingestellt werden. Die Lichtflecke bzw. Abtaststrahlen werden mit dem Lichtstrahl eines Lasers LD gebildet, der mit dem Gitter G in einen zentralen Abtaststrahl und Nebenstrahlen +/- erster Ordnung aufgeteilt wird. Die Nebenstrahlen bilden die Hilfsstrahlen E, F. Nach dem Gitter G passiert der aus dem zentralen Abtaststrahl und den Hilfsstrahlen E, F bestehende Lichtstrahl einen Kolimator C, trifft auf einen halbdurchlässigen Spiegel auf, von dem er auf einen Ablenkspiegel gerichtet wird, der den Lichtstrahl durch eine Objektivlinse OL hindurch auf den Aufzeichnungsträger D lenkt. Mittels dieser optischen Einrichtung werden der zentrale Abtaststrahl und die Hilfsstrahlen auf dem Aufzeichnungsträger D als Abtastpunkte abgebildet. Der Tangentialwinkel α zwischen der Spurrichtung und den Hilfsstrahlen E, F wird dabei mit dem Gitter G eingestellt. Das vom Aufzeichnungsträger reflektierte Licht passiert ebenfalls die Objektivlinse OL und wird über den Ablenkspiegel DM, durch den halbdurchlässigen Spiegel HP, eine Fokuslinse FL und eine Zylinderlinse CL hindurch auf einen Photodetektor PD gelenkt. Auf dem Photodetektor PD werden die Abtastpunkte zum Erzeugen des Informationssignals sowie zum Erzeugen von Fokus- und Spurfehlersignalen abgebildet. Das bedeutet, daß bei einer Veränderung des Tangentialwinkels α mit dem Gitter G auch der Photodetektor PD entsprechend neu zu justieren wäre oder zusätzliche Photoelemente vorgesehen werden müßten. In einem kompatiblen Aufzeichnungs- oder Wiedergabegerät scheint es jedoch nahezu unmöglich zu sein, derartige Einstellungen dem Typ des Aufzeichnungsträgers SD, CD entsprechend automatisiert vorzunehmen, da die Einstellung sehr genau sowie mit hoher Langzeitstabilität und Reproduzierbarkeit zu erfolgen hat. Auch das Ausrichten der Hilfsstrahlen E, F in einem Tangentialwinkel α zur Spurrichtung T, der einem Mittelwert oder einem Wert zwischen den optimalen Tangentialwinkeln α für die unterschiedlichen Aufzeichnungsträger entspricht, führt nicht zu einem Spurfehlersignal, das eine Spurführung der Aufzeichnungsträger mit unterschiedlichem Spurabstand P1, P2 ermöglicht. Aufgrund der geringeren Toleranzen der SD müßte ein Tangentialwinkel α gewählt werden, der mehr den Bedingungen der SD entspricht. Folglich verschlechtern sich die Eigenschaften der Spurführung für die CD erheblich. Die Spurführung einer CD wird für den Fall, daß der Tangentialwinkel α für die Hilfsstrahlen E und F nur auf die Hälfte seines Optimalwertes eingestellt wird, so schlecht, daß des unmöglich ist, eine Disk abzuspielen, die eine Exzentrizität innerhalb der zulässigen Grenzwerte aufweist. Trotz dieser Bedingungen, die ein kompatibles Aufzeichnungs- oder Wiedergabegerät mit Dreipunktabtastung für unterschiedliche Spurabstände aufweisende Aufzeichnungsträger unmöglich erscheinen lassen, wurde eine Anordnung der Abtastpunkte gefunden, bei der trotz unterschiedlicher Spurabstände P1, P2 ein Spurfehlersignal E-F erzeugt wird, das nahezu dem einer optimalen Einstellung des Tangentialwinkels α für die unterschiedlichen Aufzeichnungsträger CD, SD entspricht. Hierzu werden die Abtastmittelpunkte des zentralen Abtastpunktes M und der Hilfsstrahlen E, F in einem seitlichen Abstand zueinander angeordnet, der annähernd 7/4 des Spurabstandes des Aufzeichnungsträgers mit dem geringeren Spurabstand und annähernd 3/4 des Spurabstandes des Aufzeichnungsträgers mit dem grösseren Spurabstand beträgt . Leider tritt dieser Fall für einen möglichst geringen Tangentialwinkel α nicht genau ein, jedoch wird diese Bedingung näherungsweise erreicht, wenn die Innenseite der übernächsten Spur der SD zur Spurführung verwendet wird. Dieser Ort stimmt nahezu überein mit der inneren Seite der Nachbarspur einer CD. Verglichen mit der optimalen Einstellung für eine CD bzw. SD ist das Spurfehlersignal jedoch invertiert. Dies kann jedoch durch einfaches Vertauschen der Signale von den Hilfsstrahlen E, F kompensiert werden. In der Praxis ist die Lösung ein wenig komplexer, da zusätzlich unterschiedliche Substratdicken und unterschiedliche Brennweiten für unterschiedliche Aufzeichnungsträger zu berücksichtigen sind. Dennoch führt die angegebene Lösung zu einem kompatiblen Aufzeichnungs-oder Wiedergabegerät für Aufzeichnungsträger mit unterschiedlichem Spurabstand. Im allgemeinen ist es von Vorteil, wenn die Brennweite für den Aufzeichnungsträger mit größerem Spurabstand größer als die für den geringeren Spurabstand ist.

Zum Justieren des Dreipunktsystems werden vorzugsweise in einem ersten Verfahrensschritt die Abtastpunkte der Hilfsstrahlen E, F des Abtastsystems für einen den geringsten Spurabstand aufweisenden Aufzeichnungsträger SD derart eingestellt, daß sie eine maximale Korrelation zum zentralen Abtastpunkt aufweisen. In einem zweiten Verfahrensschritt wird dann der Tangentialwinkel α so weit vergrößert, bis die Phasenverschiebung zwischen den von Hilfsstrahlen E, F gebildeten Signalen auf 2 x (360° + 180°) angestiegen ist.

Einem zweiten Einstellungsverfahren entsprechend wird der Tangentialwinkel α zunächst für den Aufzeichnungsträger CD mit dem größeren Spurabstand eingestellt und dann eine Feineinstellung für den Aufzeichnungsträger SD mit dem geringeren Spurabstand durchgeführt.

Einem dritten Verfahren entsprechend wird zum Einstellen des Tangentialwinkels α ein Aufzeichnungsträger SD mit dem geringsten Spurabstand verwendet, bei dem jedoch nur jede zweite Spur als Informationsspur ausgebildet ist.

## Patentansprüche

1. Kompatibles Aufzeichnungs- oder Wiedergabegerät mit Dreipunktabtastsystem für unterschiedlichen Spurabstand (P1, P2) aufweisende Aufzeichnungsträger (SD, CD) **dadurch gekennzeichnet, dass** die Abtastmittelpunkte in einem seitlichen Abstand angeordnet sind, der annähernd 7/4 des Spurabstandes (P1) des Aufzeichnungsträgers (SD) mit dem geringeren Spurabstand und annähernd 3/4 des Spurabstandes (P2) des Aufzeichnungsträgers (CD) mit dem größeren Spurabstand ist.

2. Gerät nach Anspruch 1, **dadurch gekennzeichet, dass** die Daten- oder Informationsspur des Aufzeichnungsträgers (SD, CD) eine Spirale ist.

3. Gerät nach Anspruch 1, **dadurch gekennzeichnet, dass** die Daten- oder Informationsspur des Aufzeichungsträgers (SD, CD) Parallelspuren sind.

4. Gerät nach einem der Ansprüche 1 bis 3, **dadurch gekennzeichnet, dass** die Brennweite des Dreipunktabtastsystems ein zum Spurabstand proportionales Verhältnis aufweist.

## Claims

1. Compatible recording or reproduction device with a three-beam scanning system for recording media (SD, CD) having different track spacings (P1, P2), **characterized in that** the scanning centre points are arranged at a lateral spacing which is approximately 7/4 of the track spacing (P1) of the recording medium (SD) having the smaller track spacing and approximately 3/4 of the track spacing (P2) of the recording medium (CD) having the larger track spacing.

2. Device according to Claims 1, **characterized in that** the data or information track of the recording medium (SD, CD) is a spiral.

3. Device according to Claims 1, **characterized in that** the data or information track of the recording medium (SD, CD) are parallel tracks.

4. Device according to one of Claims 1 to 3, **characterized in that** the focal length of the three-beam scanning system has a ratio which is proportional to the track spacing.

## Revendications

1. Dispositif d'enregistrement ou de reproduction compatible doté d'un système de balayage à trois faisceaux pour des supports d'enregistrement (SD, CD) possédant différents espacements de piste (P1, P2), **caractérisé en ce que** les points centraux de balayage sont agencés dans un espacement latéral égal à environ 7/4 de l'espacement de piste (P1) du support d'enregistrement (SD) présentant l'espacement de piste le plus faible et environ 3/4 de l'espacement de piste (P2) du support d'enregistrement (CD) présentant l'espacement de piste le plus élevé.

2. Dispositif selon la revendication 1, **caractérisé en ce que** la piste de données ou d'informations du support d'enregistrement (SD, CD) est une spirale.

3. Dispositif selon la revendication 1, **caractérisé en ce que** la piste de données ou d'informations du support d'enregistrement (SD, CD) est constituée de pistes parallèles.

4. Dispositif selon une des revendications 1 à 3, **caractérisé en ce que** la longueur focale du système de balayage à trois faisceaux présente un ratio proportionnel à l'espacement de piste.
